(19) Europäisches Patentamt
European Patent Office
Office européen des brevets

(11) **EP 3 901 834 B1**

(12) **FASCICULE DE BREVET EUROPEEN**

(45) Date de publication et mention de la délivrance du brevet:
**02.07.2025 Bulletin 2025/27**

(21) Numéro de dépôt: **21168489.9**

(22) Date de dépôt: **15.04.2021**

(51) Classification Internationale des Brevets (IPC):
***G06N 3/063*** *(2023.01)*

(52) Classification Coopérative des Brevets (CPC):
**G06N 3/063**

(54) **PROCÉDÉ D'IMPLÉMENTATION D'UN RÉSEAU DE NEURONES ARTIFICIELS DANS UN CIRCUIT INTÉGRÉ**

VERFAHREN ZUR IMPLEMENTIERUNG EINES NETZWERKS AUS KÜNSTLICHEN NEURONEN IN EINER INTEGRIERTEN SCHALTUNG

METHOD FOR IMPLEMENTING AN ARTIFICIAL NEURAL NETWORK IN AN INTEGRATED CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.04.2020 FR 2004070**

(43) Date de publication de la demande:
**27.10.2021 Bulletin 2021/43**

(73) Titulaire: **STMicroelectronics (Rousset) SAS 13790 Rousset (FR)**

(72) Inventeurs:
• **FOLLIOT, Laurent 06620 GOURDON (FR)**
• **DEMAJ, Pierre 06200 NICE (FR)**

(74) Mandataire: **Casalonga Casalonga & Partners Bayerstraße 71/73 80335 München (DE)**

(56) Documents cités:
**US-A1- 2019 087 718**

• **STMICROELECTRONICS: "Getting Started with STM32Cube.AI", 25 December 2018 (2018-12-25), pages 1, XP054981396, Retrieved from the Internet <URL:https://www.youtube.com/watch?v=grgNXdkmzzQ> [retrieved on 20210211]**

**Description**

Des modes de réalisation et de mise en œuvre concernent les réseaux de neurones artificiels, et plus particulièrement leur implémentation dans un circuit intégré.

Les réseaux de neurones artificiels comprennent généralement une succession de couches de neurones.

Chaque couche prend en entrée des données auxquelles des poids sont appliqués et délivre en sortie des données de sortie après traitement par des fonctions d'activation des neurones de ladite couche. Ces données de sortie sont transmises à la couche suivante dans le réseau de neurones.

Les poids sont des données, plus particulièrement des paramètres, de neurones configurables pour obtenir de bonnes données de sortie.

Les poids sont ajustés lors d'une phase d'apprentissage généralement supervisée, notamment en exécutant le réseau de neurones avec comme données d'entrée des données déjà classifiées d'une base de données de référence.

Les réseaux de neurones peuvent être quantifiés pour accélérer leur exécution et réduire les besoins en mémoire. En particulier, la quantification du réseau de neurones consiste à définir un format de représentation de données du réseau de neurones, tels que les poids ainsi que les entrées et les sorties de chaque couche du réseau de neurones.

En particulier, les réseaux de neurones sont quantifiés selon un format de représentation d'un entier. Néanmoins, il existe de nombreux formats de représentations possibles pour les entiers. En particulier, les entiers peuvent être représentés selon une représentation signée ou non signée, symétrique ou asymétrique. En outre, les données d'un même réseau de neurones peuvent être représentés selon différentes représentations d'entier.

De nombreux acteurs industriels développent des infrastructures logicielles (en anglais « framework »), telles que Tensorflow Lite ® développé par la société Google ou encore PyTorch, pour développer des réseaux de neurones quantifiés.

Le choix du format de représentation de données du réseau de neurones quantifié peut varier selon les différents acteurs développant ces infrastructures logicielles.

Les réseaux de neurones quantifiés sont entraînés puis intégrés dans des circuits intégrés, tels que des microcontrôleurs.

En particulier, un logiciel d'intégration peut être prévu afin d'intégrer un réseau de neurones quantifié dans un circuit intégré. On connaît par exemple le logiciel d'intégration STM32Cube.AI et son extension X-CUBE-AI développés par la société STMicroelectronics.

Le logiciel d'intégration peut être configuré pour convertir le réseau de neurones quantifié en un réseau de neurones optimisé pour être exécuté sur un circuit intégré donné.

Néanmoins, afin de pouvoir traiter des réseaux de neurones quantifiés présentant différents formats de représentation de données, il est nécessaire que le logiciel d'intégration soit compatible avec l'ensemble de ces différents formats de représentation.

Pour être compatible, une solution consiste à programmer spécifiquement le logiciel d'intégration pour chaque format de représentation.

Toutefois, une telle solution présente l'inconvénient d'augmenter les coûts de développement, de validation et de support technique. En outre, une telle solution présente également l'inconvénient d'augmenter la taille du code du logiciel d'intégration.

Il existe donc un besoin de proposer un procédé d'implémentation d'un réseau de neurones artificiel dans un circuit intégré permettant de supporter tout type de format de représentation et pouvant être mis en œuvre à faible coût.

En outre, les logiciels d'intégration sont configurés pour exécuter le réseau de neurones par un processeur, on parle alors d'exécution logicielle, ou au moins en partie par des circuits électroniques dédiés du circuit intégré pour accélérer son exécution. Les circuits électroniques dédiés peuvent être des circuits logiques par exemple.

Le processeur et les circuits électroniques dédiés peuvent avoir des contraintes différentes. En particulier, ce qui peut être optimal pour le processeur peut ne pas être optimal pour un circuit électronique dédié, et inversement.

Il existe donc également un besoin de proposer un procédé d'implémentation permettant d'améliorer, voire d'optimiser, la représentation du réseau de neurones en fonction des contraintes d'exécution du réseau de neurones.

L'invention est telle que définie dans les revendications.

Selon un aspect, il est proposé un procédé d'implémentation d'un réseau de neurones artificiel dans un circuit intégré, procédé comprenant :

- une obtention d'un fichier numérique initial représentatif d'un réseau de neurones configuré selon au moins un format de représentation de données, puis
- a) une détection d'au moins un format de représentation d'au moins une partie des données dudit réseau de neurones, puis
- b) une conversion d'au moins un format de représentation détecté vers un format de représentation prédéfini de façon à obtenir un fichier numérique modifié représentatif du réseau de neurones, puis

- c) une intégration dudit fichier numérique modifié dans une mémoire du circuit intégré.

Le réseau de neurones peut être un réseau de neurones quantifié et entraîné par un utilisateur final, par exemple à l'aide d'une infrastructure logicielle telle que Tensorflow Lite ® ou encore PyTorch.

Un tel procédé d'implémentation peut être mis en œuvre par un logiciel d'intégration.

Le réseau de neurones est optimisé, notamment par le logiciel d'intégration, avant son intégration dans le circuit intégré.

Un tel procédé d'implémentation permet de supporter tout type de format de représentation de données du réseau de neurones tout en réduisant considérablement les coûts de mise en œuvre d'un tel procédé d'implémentation.

En particulier, la conversion d'un format de représentation de données détecté du réseau de neurones en un format de représentation de données prédéfini permet de limiter le nombre de formats de représentation à prendre en charge par un logiciel d'intégration.

Plus particulièrement, le logiciel d'intégration peut être programmé pour prendre en charge uniquement des formats de représentation de données prédéfinis, notamment pour une optimisation du réseau de neurones. La conversion permet d'adapter le réseau de neurones pour être utilisé par le logiciel d'intégration.

Un tel procédé d'implémentation permet de simplifier la programmation du logiciel d'intégration et de réduire la taille mémoire du code du logiciel d'intégration.

Un tel procédé d'implémentation permet ainsi pour un logiciel d'intégration de pouvoir supporter des réseaux de neurones générés par n'importe quelle infrastructure logicielle indépendamment des paramètres de quantification choisis par l'utilisateur final.

Le réseau de neurones comprend usuellement une succession de couches de neurones. Chaque couche de neurones reçoit des données d'entrée et délivre des données de sortie. Ces données de sortie sont prises en entrée d'au moins une couche suivante dans le réseau de neurones.

Dans un mode de mise en œuvre avantageux, la conversion du format de représentation d'au moins une partie des données est effectuée pour au moins une couche du réseau de neurones.

De préférence, la conversion du format de représentation d'au moins une partie des données est effectuée pour chaque couche du réseau de neurones.

Le réseau de neurones comprend une succession de couches, et les données du réseau de neurones comportent des poids attribués aux couches ainsi que des données d'entrée et des données de sortie pouvant être générées et utilisées par les couches du réseau de neurones.

Lorsque la détection permet de détecter que le format de représentation des poids est un format non signé, la conversion peut comprendre une modification de la représentation des poids en valeurs signées ainsi qu'une modification de la valeur des données représentant ces poids.

En variante, lorsque la détection permet de détecter que le format de représentation des poids est un format signé, la conversion peut comprendre une modification de la représentation des poids en valeurs non signées ainsi qu'une modification de la valeur des données représentant ces poids.

Par ailleurs, lorsque la détection permet de détecter que le format de représentation des données d'entrée et des données de sortie de chaque couche est un format non signé, la conversion peut comprendre une modification de la représentation des données d'entrée et des données de sortie en valeurs signées.

En variante, lorsque la détection permet de détecter que le format de représentation des données d'entrée et des données de sortie de chaque couche est un format de représentation signé, la conversion peut comprendre une modification de la représentation des données d'entrée et des données de sortie en valeurs non signées.

En outre, la conversion comprend l'ajout d'une première couche de conversion en entrée du réseau de neurones configurée pour modifier la valeur des données pouvant être fournies en entrée du réseau de neurones selon le format de représentation prédéfini, et l'ajout d'une seconde couche de conversion en sortie du réseau de neurones configurée pour modifier la valeur des données de sortie d'une dernière couche du réseau de neurones selon un format de représentation des données de sortie du fichier numérique initial.

Le format de représentation prédéfini est choisi en fonction du matériel d'exécution du réseau de neurones. Le format de représentation prédéfini est choisi selon si le réseau de neurones est exécuté par un processeur ou bien au moins en partie par des circuits électroniques dédiés de façon à accélérer son exécution.

De la sorte, il est possible de prendre en compte les contraintes du matériel d'exécution pour optimiser l'exécution du réseau de neurones.

Lorsqu'on choisit d'exécuter le réseau de neurones par un processeur et lorsque les poids du réseau de neurones sont représentés selon un format de représentation asymétrique, le format de représentation prédéfini des poids est un format non signé et asymétrique, et le format de représentation prédéfini des données d'entrée et de sortie de chaque couche est un format non signé et asymétrique.

En outre, lorsqu'on choisit d'exécuter le réseau de neurones par un processeur et lorsque les poids du réseau de neurones sont représentés selon un format de représentation symétrique, le format de représentation prédéfini des poids est un format signé et symétrique, et le format de représentation prédéfini des données d'entrée et de sortie de chaque couche est un format non signé et asymétrique. Néanmoins, en variante, le format de représentation prédéfini des données d'entrée et de sortie de chaque couche et le format de représentation prédéfini des poids peut être un format non signé et asymétrique.

Par ailleurs, lorsqu'on choisit d'exécuter le réseau de neurones à l'aide de circuits électroniques dédiés et lorsque les poids du réseau de neurones sont représentés selon un format de représentation symétrique, le format de représentation prédéfini des poids est un format signé et symétrique, et le format de représentation prédéfini des données d'entrée et de sortie de chaque couche est un format signé et asymétrique, ou un format asymétrique et non signé si les circuits électroniques dédiés sont configurés pour supporter une arithmétique non signée.

En outre, lorsqu'on choisit d'exécuter le réseau de neurones au moins en partie à l'aide de circuits électroniques dédiés et lorsque les poids du réseau de neurones sont représentés selon un format de représentation asymétrique, le format de représentation prédéfini des poids est un format signé et asymétrique, et le format de représentation prédéfini des données d'entrée et de sortie de chaque couche est un format signé et asymétrique, ou un format asymétrique et non signé si les circuits électroniques dédiés sont configurés pour supporter une arithmétique non signée.

Selon un autre aspect, il est proposé un produit programme d'ordinateur comprenant des instructions qui, lorsque le programme est exécuté par un ordinateur, conduisent celui-ci à mettre en œuvre les étapes a) et b) et c) et d) du procédé tel que décrit précédemment.

Selon un autre aspect, il est proposé un support de données lisible par ordinateur, sur lequel est enregistré un produit programme d'ordinateur tel que décrit précédemment.

Selon un autre aspect, il est proposé un ordinateur, comprenant :

- une entrée pour recevoir un fichier numérique initial représentatif d'un réseau de neurones configuré selon au moins un format de représentation de données, et
- une unité de traitement configurée pour effectuer:

  o une détection d'au moins un format de représentation d'au moins une partie des données dudit réseau de neurones, puis
  o une conversion d'au moins un format de représentation détecté vers un format de représentation prédéfini de façon à obtenir un fichier numérique modifié représentatif du réseau de neurones, puis
  o une intégration dudit fichier numérique modifié dans une mémoire du circuit intégré.

Ainsi, il est proposé un outil informatique comprenant un support de données tel que décrit précédemment, ainsi qu'une unité de traitement configurée pour exécuter un produit programme d'ordinateur tel que décrit précédemment.

D'autres avantages et caractéristiques de l'invention apparaîtront à l'examen de la description détaillée de modes de mise en œuvre et de réalisation, nullement limitatifs, et des dessins annexés sur lesquels :

[Fig 1]

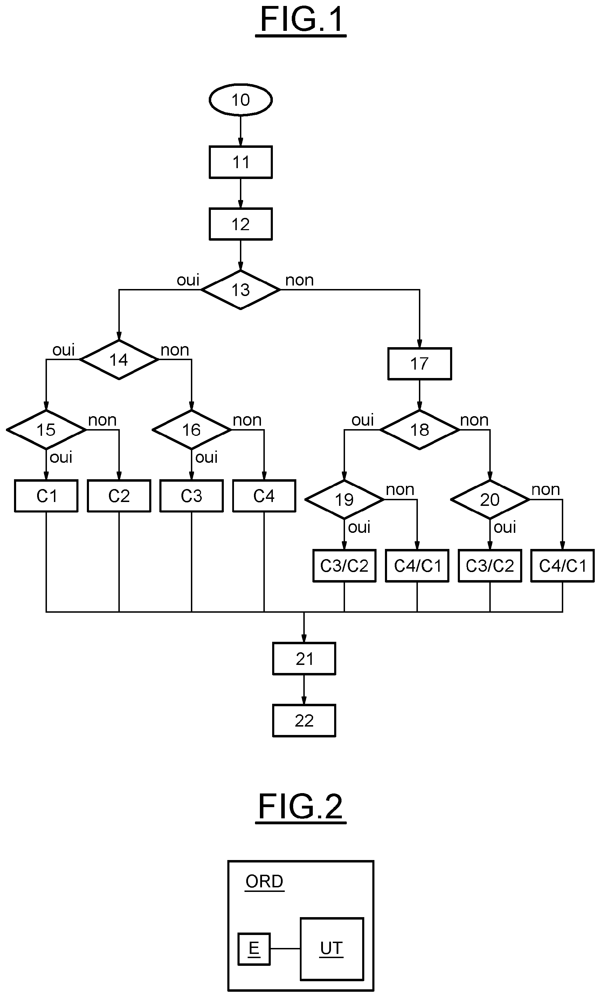

[Fig 2] illustrent schématiquement un mode de réalisation et un mode de mise en œuvre de l'invention.

La figure 1 représente un procédé d'implémentation selon un mode de mise en œuvre de l'invention. Ce procédé d'implémentation peut être mis en œuvre par un logiciel d'intégration.

Le procédé comprend tout d'abord une étape 10 d'obtention dans lequel on obtient un fichier numérique initial représentatif d'un réseau de neurones. Ce réseau de neurones est configuré selon au moins un format de représentation de données.

En particulier, le réseau de neurones comprend usuellement une succession de couches de neurones. Chaque couche de neurones reçoit des données d'entrée auxquelles des poids sont appliqués et délivre des données de sortie.

Les données d'entrée peuvent être des données reçues en entrée du réseau de neurones ou bien des données de sortie d'une couche précédente.

Les données de sortie peuvent être des données délivrées en sortie du réseau de neurones ou bien des données générées par une couche et délivrées en entrée d'une couche suivante du réseau de neurones.

Les poids sont des données, plus particulièrement des paramètres, de neurones configurables pour obtenir de bonnes données de sortie.

En particulier, le réseau de neurones est un réseau de neurones quantifié et entraîné par un utilisateur, par exemple à l'aide d'une infrastructure logicielle telle que Tensorflow Lite ® ou encore PyTorch. En particulier, un tel entraînement permet de définir des poids.

Le réseau de neurones présente alors au moins un format de représentation choisi par exemple par l'utilisateur pour ses données d'entrée de chaque couche, ses données de sortie de chaque couche et pour les poids des neurones de chaque couche. En particulier, les données d'entrée et les données de sortie de chaque couche ainsi que les poids sont des entiers pouvant être représentés selon un format signé ou non signé, symétrique ou asymétrique.

Le fichier numérique initial contient une ou plusieurs indications permettant d'identifier le ou les formats de représentation. De telles indications peuvent notamment être représentées dans le fichier numérique initial par exemple sous la forme d'un fichier binaire.

En variante ces indications peuvent être sous la forme d'un fichier .tflite quantifié qui comme indiqué ci-après peut contenir les informations de quantification telles que l'échelle s et la valeur zp représentative d'un point zéro.

Le fichier numérique initial est fourni au logiciel d'intégration.

Le logiciel d'intégration est programmé pour optimiser le réseau de neurones. En particulier, le logiciel d'intégration permet par exemple d'optimiser une topologie du réseau, un ordre d'exécution des éléments du réseaux de neurones ou encore d'optimiser une allocation mémoire pouvant être mise en œuvre lors de l'exécution du réseau de neurones.

Afin de simplifier la programmation du logiciel d'intégration, l'optimisation du réseau de neurones est programmée pour fonctionner avec un nombre limité de formats de représentation de données. Ces formats de représentation sont prédéfinis et détaillés ci-dessous.

Le logiciel d'intégration est programmé pour pouvoir convertir tout type de format de représentation de données vers un format de représentation prédéfini avant l'optimisation, afin de supporter tout type de format de représentation de données.

De la sorte, le logiciel d'intégration est configuré pour permettre l'optimisation du réseau de neurones à partir d'un réseau de neurones pouvant être configuré selon tout type de format de représentation de données.

Cette étape de conversion est comprise dans le procédé d'implémentation.

En particulier, cette étape de conversion est adaptée pour modifier un format de représentation symétrique en un format de représentation asymétrique. Cette étape de conversion est également adaptée pour modifier un format de représentation signé en un format de représentation non signé, et inversement. Le fonctionnement de cette étape de conversion sera décrit plus en détail ci-dessous.

Afin d'améliorer la compréhension du fonctionnement de la conversion, il convient de rappeler qu'un entier flottant quantifié sur n-bits peut être exprimé selon la forme suivante :

$$[\text{Math 1}]$$
$$r = s \times (q - zp),$$

où q et zp sont des entiers sur n-bits avec le même format de représentation signé ou non signé et s est une échelle en valeur flottante prédéfini. L'échelle s et la valeur zp représentative d'un point zéro peuvent être contenues dans le fichier numérique initial.

Cette forme est connue par l'homme du métier, et est par exemple décrite dans la spécification de TensorFlow Lite concernant la quantification. Cette spécification est notamment accessible sur le site internet : https://www.tensorflow. org/lite/performance/quantization_sp ec.

En particulier, pour les données dans un format de représentation symétrique, la valeur zp vaut zéro.

Ainsi, le format de représentation symétrique peut être considéré comme un format de représentation asymétrique avec zp égal à 0.

Le changement de format de représentation des poids de chaque couche à partir d'un format de représentation non signé vers un format de représentation non signé, ou inversement, peut être obtenu comme indiqué ci-dessous.

Les poids de chaque couche selon un format de représentation non signé peuvent être exprimés selon la forme suivante :

$$[\text{Math 2}]$$
$$r_w = s_w \times (q_w - zp_w),$$

où $q_w$ and $zp_w$ sont des données non signées dans l'intervalle $[0 ; 2^n\text{-}1]$

Il est possible d'obtenir un format de représentation signé des poids en appliquant la formule suivante :

$$[\text{Math 3}]$$
$$r_w = s_w \times (q_{w2} - zp_{w2}),$$

où $q_{w2} = q_w - 2^{n\text{-}1}$ et $zp_{w2} = zp_w - 2^{n\text{-}1}$ sont des données d'entrée signées dans l'intervalle $[-2^{n\text{-}1}\ 2^{n\text{-}1}\text{-}1]$.

Il est possible d'obtenir un format de représentation non signé des poids en appliquant la formule suivante :

[Math 4]

$$r_w = s_w \times (q_w - zp_w), \text{ où } q_w = q_{w2} + 2^{n-1} \text{ et } zp_w = zp_{w2} + 2^{n-1},$$

où $q_{w2}$ and $zp_{w2}$ sont des données d'entrée signées dans l'intervalle [-$2^{n-1}$ $2^{n-1}$-1].

Le changement de format de représentation des données en entrée et en sortie de chaque couche à partir d'un format de représentation signé vers un format de représentation non signé, ou inversement, peut être obtenu comme indiqué ci-dessous.

Les données en entrée de chaque couche selon un format de représentation signé peuvent être exprimées selon la forme suivante :

[Math 5]

$$r_i = s_i \times (q_i - zp_i),$$

où $q_i$ et $zp_i$ sont des données d'entrées signées dans l'intervalle [-$2^{n-1}$ ; $2^{n-1}$-1], avec n étant le nombre de bits utilisés pour représenter ces données d'entrée signées.

Il est possible d'obtenir un format de représentation non signé des données en entrée en appliquant la formule suivante :

[Math 6]

$$r_i = s_i \times (q_{i2} - zp_{i2}), \text{ où } q_{i2} = q_i + 2^{n-1} \text{ et } zp_{i2} = zp_i + 2^{n-1}$$

sont des données non signées dans l'intervalle [0 ; $2^n$-1].

Il est également possible d'obtenir un format de représentation signé des données en entrée en appliquant la formule suivante :

[Math 7]

$$r_i = s_i \times (q_i - zp_i), \text{ où } q_i = q_{i2} - 2^{n-1} \text{ et } zp_i = zp_{i2} - 2^{n-1},$$

où $q_{i2}$ et $zp_{i2}$ sont des données d'entrée non signées dans l'intervalle [0 ; $2^n$-1].

Les données en sortie de chaque couche selon un format de représentation signé peuvent être exprimées selon la forme suivante :

[Math 8]

$$r_o = s_o \times (q_o - zp_o),$$

où $q_o$ et $zp_o$ sont des données de sortie signées dans l'intervalle [-$2^{n-1}$ ; $2^{n-1}$-1]

Les données en sortie de chaque couche sont notamment calculées selon la formule suivante :

[Math 9]

$$r_o = r_i \times r_w$$

Ainsi, il est possible d'obtenir un format de représentation non signé des données en sortie des couches du réseau de neurones, par exemple des couches de convolution ou des couches denses, en appliquant la formule suivante :

[Math 10]

$$r_o = s_o \times (q_{o2} - zp_{o2}), \text{ où } q_{o2} = q_o + 2^{n-1} \text{ et } zp_{o2} = zp_o + 2^{n-1},$$

$q_{o2}$ et $zp_{o2}$ sont des données non signées dans l'intervalle [0 ; $2^n$-1]

Il est également possible d'obtenir un format de représentation signé des données en sortie en appliquant la formule suivante :

[Math 11]
$$r_o = s_o \times (q_o - zp_o), \text{ où } q_o = q_{o2} - 2^{n-1} \text{ et } zp_o = zp_{o2} - 2^{n-1},$$

$q_{o2}$ et $zp_{o2}$ sont non signées dans l'intervalle $[0 ; 2^n\text{-}1]$.

Lorsque le format de représentation des données d'entrée d'une couche est converti de non signé à signé, les données de sortie $q_0$ de cette même couche seront également signées lorsque la donnée $zp_0$ est convertie en signé.

Ainsi, une modification du format de représentation de non signé à signé des données en entrée du réseau de neurones et du format de représentation des données $zp_0$ de chaque couche permet d'obtenir directement des données $q_0$ qui sont utilisées en tant que données d'entrée de la couche suivante. Il n'est donc pas nécessaire de modifier la valeur des données de sortie entre deux couches successives lors d'une exécution du réseau de neurones.

En particulier, la conversion du format de représentation des données d'entrée et de sortie peut nécessiter l'ajout d'une première couche de conversion en entrée du réseau de neurones pour convertir les données en entrée du réseau dans le format de représentation souhaité pour l'exécution du réseau de neurones et une seconde couche de conversion en sortie du réseau de neurones dans un format de représentation désiré par l'utilisateur en sortie du réseau de neurones.

Afin d'adapter le format de représentation des données, le procédé comprend une étape 11 de détection du matériel d'exécution avec lequel le réseau de neurones doit être exécuté si ce matériel d'exécution est renseigné par l'utilisateur.

En particulier, le réseau de neurones peut être exécuté par un processeur, on parle alors d'exécution logicielle, ou bien au moins en partie par un circuit électronique dédié. Le circuit électronique dédié est configuré pour réaliser une fonction définie de façon accélérer l'exécution du réseau de neurones. Le circuit électronique dédié peut par exemple être obtenu à partir d'une programmation en langage VHDL.

Le procédé comprend une étape de détection d'au moins un format de représentation des données du réseau de neurones.

De préférence, chaque format de représentation des données du réseau de neurones est détecté.

En particulier, le format de représentation des données d'entrée et de sortie de chaque couche est détecté ainsi que le format de représentation des poids des neurones de chaque couche.

Ensuite, le procédé d'implémentation permet de convertir, si besoin, le format de représentation détecté des données d'entrée et de sortie de chaque couche ainsi que le format de représentation détecté des poids des neurones de chaque couche.

Cette conversion peut être effectuée selon les contraintes d'exécution du réseau de neurones, notamment selon si le réseau de neurones est exécuté par un processeur ou bien par un circuit électronique dédié.

En effet, le processeur et le circuit électronique dédié peuvent avoir des contraintes différentes. Par exemple, lorsque le réseau de neurones est exécuté au moins en partie par un circuit électronique dédié, il n'est pas possible de changer un format de représentation asymétrique en un format de représentation symétrique sans modifier le nombre de bits représentant la donnée.

Ainsi, par exemple, une conversion d'un format de représentation asymétrique d'un poids vers un format de représentation symétrique de ce poids conduit soit à un poids représenté sur un nombre de bits plus élevé pour maintenir la précision, ce qui augmente néanmoins le temps d'exécution du réseau de neurones, soit à une réduction de la précision en conservant le nombre de bits pour maintenir le temps d'exécution.

Ainsi, de préférence, lorsque le format de représentation détecté d'une donnée du réseau de neurones est asymétrique, il est ici préféré de conserver ce format de représentation asymétrique.

Par ailleurs, si le réseau de neurones utilise des fonctions d'activation telles que ReLU (de l'anglais « Rectified Linear Units ») ou Sigmoid, il est préférable d'utiliser un format de représentation non signé. En effet, un format de représentation signé augmente le temps d'exécution de ces fonctions d'activation.

Ainsi, le procédé comprend une étape 13 de vérification d'une identification d'un matériel d'exécution. Dans cette étape, on vérifie si l'utilisateur a renseigné le matériel d'exécution sur lequel le réseau de neurones doit être exécuté.

En particulier, l'utilisateur peut renseigner si le réseau de neurones doit être exécuté par le processeur ou bien au moins en partie par un circuit électronique dédié.

L'utilisateur peut également ne pas renseigner le matériel d'exécution.

Si à l'étape 13 on détermine que l'utilisateur a renseigné le matériel d'exécution à utiliser, le procédé comprend une étape 14 de détermination dans laquelle il est déterminé si le réseau de neurones doit être exécuté par le processeur ou par des circuits électroniques dédiés.

Si à l'étape 14, on détermine que le réseau de neurones doit être exécuté par le processeur alors le procédé comprend une étape 15 dans laquelle on détermine si le format de représentation des poids est asymétrique.

Si la réponse à l'étape 15 est oui, le format de représentation des poids est asymétrique, alors on convertit le format de représentation des données selon une conversion C1. La conversion C1 permet d'obtenir un format de représentation des poids non signé et asymétrique, et un format de représentation des données en entrée et en sortie de chaque couche non signé et asymétrique. Pour ce faire, on applique la formule [Math 4] pour les poids si leur format de représentation d'origine est signé, et les formules [Math 6], [Math 10] pour les données en entrée et les données en sortie de chaque couche si leur format de représentation d'origine est signé.

Si à l'étape 15 la réponse est non, le format de représentation des poids est symétrique, alors on convertit le format de représentation des données selon une conversion C2. La conversion C2 permet d'obtenir un format de représentation des poids signé et symétrique, et un format de représentation prédéfini des données en entrée et en sortie de chaque couche non signé et asymétrique. Pour ce faire, on applique la formule [Math 3] pour les poids si leur format de représentation d'origine est non signé, et les formules [Math 6] et [Math 10] pour les données en entrée et les données en sortie de chaque couche si leur format de représentation d'origine est signé. Si à l'étape 14 la réponse est non, le réseau de neurones doit être exécuté à l'aide de circuits électroniques dédiés, alors le procédé comprend une étape 16 dans laquelle on détermine si le format de représentation des poids est symétrique.

Si la réponse à l'étape 16 est non, le format de représentation des poids est symétrique, alors on convertit le format de représentation des données selon une conversion C3. La conversion C3 permet d'obtenir un format de représentation des poids signé et symétrique, et un format de représentation des données en entrée et en sortie de chaque couche signé et asymétrique. Pour ce faire, on applique la formule [Math 3] pour les poids et les formules [Math 7] et [Math 11] pour les données en entrée et les données en sortie de chaque couche si leur format d'origine est un format de représentation signé.

Au lieu d'effectuer la conversion C3, il est également possible de réaliser la conversion C2 si les circuits électroniques dédiés supportent une arithmétique non signée.

Si à l'étape 16 la réponse est non, le format de représentation des poids est asymétrique, alors on convertit le format de représentation des données selon une conversion C4. La conversion C4 permet d'obtenir un format de représentation des poids signé et asymétrique, et un format de représentation des données en entrée et en sortie de chaque couche signé et asymétrique. Pour ce faire, on applique la formule [Math 3] pour les poids et les formules [Math 10] et [Math 11] pour les données en entrée et les données en sortie de chaque couche si leur format d'origine est un format de représentation signé.

Au lieu d'effectuer la conversion C4, il est également possible de réaliser la conversion C1 si les circuits électroniques dédiés supportent une arithmétique non signée.

Si à l'étape 13 la réponse est non, on détermine que l'utilisateur n'a pas renseigné le matériel d'exécution, le procédé comprend une

L'analyse permet de déterminer à l'étape 18 si le réseau de neurones doit être exécuté totalement ou bien partiellement à l'aide de circuits électroniques dédiés et partiellement par un processeur.

Si à l'étape 18 la réponse est oui, le réseau de neurones doit être exécuté totalement à l'aide de circuits électroniques dédiés, alors le procédé comprend une étape 19 dans laquelle on détermine si le format de représentation des poids est symétrique.

Si à l'étape 19 la réponse est oui, le format de représentation des poids est symétrique, alors on convertit le format de représentation des données selon la conversion C3 décrite ci-dessus, ou bien selon la conversion C2 également décrite ci-dessus si les circuits électroniques dédiés supportent une arithmétique non signée.

Si à l'étape 19 la réponse est non, le format de représentation des poids est asymétrique, alors on convertit le format de représentation des données selon la conversion C4 décrite ci-dessus, ou bien selon la conversion C1 également décrite ci-dessus si les circuits électroniques dédiés supportent une arithmétique non signée.

Si à l'étape 18 la réponse est non, le réseau de neurones doit être exécuté partiellement à l'aide de circuits électroniques dédiés, alors le procédé comprend une étape 20 dans laquelle on détermine si le format de représentation des poids est symétrique.

Si à l'étape 20 la réponse est oui, le format de représentation des poids est symétrique, alors on convertit le format de représentation des données selon la conversion C3 décrite ci-dessus, ou bien selon la conversion C2 également décrite ci-dessus si les circuits électroniques dédiés supportent une arithmétique non signée.

Si à l'étape 20 la réponse est non, le format de représentation des poids est asymétrique, alors on convertit le format de représentation des données selon la conversion C4 décrite ci-dessus, ou bien selon la conversion C1 également décrite ci-dessus si les circuits électroniques dédiés supportent une arithmétique non signée.

Ces conversions permettent d'obtenir un fichier numérique modifié représentatif du réseau de neurones.

Le procédé d'implémentation comprend ensuite une étape 21 de génération d'un code optimisé.

Le procédé d'implémentation comprend finalement une étape 22 d'intégration du réseau de neurones optimisé dans un circuit intégré.

Un tel procédé d'implémentation permet de supporter tout type de format de représentation de données du réseau de neurones tout en réduisant considérablement les coûts de mise en œuvre d'un tel procédé d'implémentation.

En particulier, la conversion d'un format de représentation de données détecté du réseau de neurones en un format de représentation de données prédéfini permet de limiter le nombre de format de représentation à prendre en charge par un logiciel d'intégration.

Plus particulièrement, le logiciel d'intégration peut être programmé pour prendre en charge uniquement des formats de représentation de données prédéfinis, notamment pour une optimisation du réseau de neurones. La conversion permet d'adapter le réseau de neurones pour être utilisé par le logiciel d'intégration.

Un tel procédé d'implémentation permet de simplifier la programmation du logiciel d'intégration et de réduire la taille mémoire du code du logiciel d'intégration.

Un tel procédé d'implémentation permet ainsi pour un logiciel d'intégration de pouvoir supporter des réseaux de neurones générés par n'importe quelle infrastructure logicielle.

La figure 2 représente un outil informatique ORD comprenant une entrée E pour recevoir le fichier numérique initial et une unité de traitement UT programmée pour mettre en œuvre le procédé de conversion décrit ci-avant permettant d'obtenir le fichier numérique modifié et d'intégrer le réseau de neurones selon ce fichier numérique modifié dans une mémoire d'un circuit intégré, par exemple un microcontrôleur de la famille STM 32 de la société STMicroelectronics, destiné à implémenter le réseau de neurones.

Un tel circuit intégré peut par exemple être incorporé au sein d'un téléphone mobile cellulaire ou d'une tablette.

## Revendications

1. Procédé d'implémentation d'un réseau de neurones artificiel dans un matériel d'exécution, le procédé comprenant :

   - une obtention (10) par un logiciel d'intégration d'un fichier numérique initial représentatif d'un réseau de neurones entraîné configuré selon au moins un format de représentation de poids signé ou non signé, et symétrique ou asymétrique, et au moins un format de représentation de données en entrée et en sortie de couche du réseau de neurones signé ou non signé, et symétrique ou asymétrique, puis
   - a) une détection par le logiciel d'intégration des formats de représentation dudit réseau de neurones, puis - b) une conversion (C1, C2, C3, C4) par le logiciel d'intégration d'au moins un format de représentation détecté vers un format de représentation prédéfini,
   de façon à obtenir un fichier numérique modifié représentatif du réseau de neurones, puis

   - c) une optimisation par le logiciel d'intégration du fichier numérique modifié représentatif du réseau de neurones pour l'exécution du réseau de neurones par ledit matériel d'exécution, puis
   - d) une intégration (21) dudit fichier numérique optimisé dans une mémoire du matériel d'exécution,

   et dans lequel ledit au moins un format de représentation détecté converti est un format de représentation non supporté par ladite optimisation du logiciel d'intégration et ledit format de représentation prédéfini est un format supporté par ladite optimisation du logiciel d'intégration,
   dans lequel lorsqu'on choisit d'exécuter le réseau de neurones par un processeur et lorsque les poids du réseau de neurones sont représentés selon un format de représentation asymétrique, le format de représentation prédéfini des poids est un format non signé et asymétrique, et le format de représentation prédéfini des données d'entrée et de sortie de chaque couche est un format non signé et asymétrique,
   et dans lequel lorsqu'on choisit d'exécuter le réseau de neurones par un processeur et lorsque les poids du réseau de neurones sont représentés selon un format de représentation symétrique, le format de représentation prédéfini des poids est un format signé et symétrique, et le format de représentation prédéfini des données d'entrée et de sortie de chaque couche est un format non signé et asymétrique, et dans lequel lorsqu'on choisit d'exécuter le réseau de neurones à l'aide de circuits électroniques dédiés et lorsque les poids du réseau de neurones sont représentés selon un format de représentation symétrique, le format de représentation prédéfini des poids est un format signé et symétrique, et le format de représentation prédéfini des données d'entrée et de sortie de chaque couche est un format signé et asymétrique ou un format asymétrique et non signé si les circuits électroniques dédiés sont configurés pour supporter une arithmétique non signée, et dans lequel lorsqu'on choisit d'exécuter le réseau de neurones au moins en partie à l'aide de circuits électroniques dédiés et lorsque les poids du réseau de neurones sont représentés selon un format de représentation asymétrique, le format de représentation prédéfini des poids est un format signé et asymétrique, et le format de représentation prédéfini des données d'entrée et de sortie de chaque couche est un format signé et asymétrique ou un format asymétrique et non signé si les circuits électroniques dédiés sont configurés pour supporter une arithmétique non signée.

2. Procédé selon la revendication 1, dans lequel la conversion du format de représentation d'au moins une partie des données est effectuée pour au moins une couche du réseau de neurones.

3. Procédé selon l'une des revendications 1 ou 2, dans lequel la conversion du format de représentation d'au moins une partie des données est effectuée pour chaque couche du réseau de neurones.

4. Procédé selon l'une des revendications 1 à 3, dans lequel la conversion comprend l'ajout d'une première couche de conversion en entrée du réseau de neurones configurée pour modifier la valeur des données pouvant être fournies en entrée du réseau de neurones selon le format de représentation prédéfini, et l'ajout d'une seconde couche de conversion en sortie du réseau de neurones configurée pour modifier la valeur des données de sortie d'une dernière couche du réseau de neurones selon un format de représentation des données de sortie du fichier numérique initial.

5. Produit programme d'ordinateur comprenant des instructions qui, lorsque le programme est exécuté par un ordinateur, conduisent celui-ci à mettre en œuvre les étapes a), b), c) et d) du procédé selon l'une des revendications 1 à 4.

6. Support de données lisible par ordinateur, sur lequel est enregistré un produit programme d'ordinateur selon la revendication 5.

7. Ordinateur comprenant :

- une entrée pour recevoir un fichier numérique initial représentatif d'un réseau de neurones entraîné configuré selon au moins un format de représentation de poids signé ou non signé, et symétrique ou asymétrique, et au moins un format de représentation de données en entrée et en sortie de couche du réseau de neurones signé ou non signé, et symétrique ou asymétrique, et
- une unité de traitement (UT) configurée pour effectuer:

  o une détection des formats de représentation dudit réseau de neurones, puis
  o une conversion (C1, C2, C3, C4) d'au moins un format de représentation détecté vers un format de représentation prédéfini de façon à obtenir un fichier numérique modifié représentatif du réseau de neurones,
  o une optimisation du fichier numérique modifié représentatif du réseau de neurones pour l'exécution du réseau de neurones un matériel d'exécution,
  o une intégration (21) dudit fichier numérique optimisé dans une mémoire du matériel d'exécution,

  dans lequel ladite détection, la conversion et ladite optimisation sont effectuées par un logiciel d'intégration exécuté par l'unité de traitement, ledit au moins un format de représentation détecté converti étant un format de représentation non supporté par ladite optimisation du logiciel d'intégration et ledit format de représentation prédéfini étant un format supporté par ladite optimisation du logiciel d'intégration, dans lequel lorsqu'on choisit d'exécuter le réseau de neurones par un processeur et lorsque les poids du réseau de neurones sont représentés selon un format de représentation asymétrique, le format de représentation prédéfini des poids est un format non signé et asymétrique, et le format de représentation prédéfini des données d'entrée et de sortie de chaque couche est un format non signé et asymétrique,
  et dans lequel lorsqu'on choisit d'exécuter le réseau de neurones par un processeur et lorsque les poids du réseau de neurones sont représentés selon un format de représentation symétrique, le format de représentation prédéfini des poids est un format signé et symétrique, et le format de représentation prédéfini des données d'entrée et de sortie de chaque couche est un format non signé et asymétrique, et dans lequel lorsqu'on choisit d'exécuter le réseau de neurones à l'aide de circuits électroniques dédiés et lorsque les poids du réseau de neurones sont représentés selon un format de représentation symétrique, le format de représentation prédéfini des poids est un format signé et symétrique, et le format de représentation prédéfini des données d'entrée et de sortie de chaque couche est un format signé et asymétrique ou un format asymétrique et non signé si les circuits électroniques dédiés sont configurés pour supporter une arithmétique non signée, et dans lequel lorsqu'on choisit d'exécuter le réseau de neurones au moins en partie à l'aide de circuits électroniques dédiés et lorsque les poids du réseau de neurones sont représentés selon un format de représentation asymétrique, le format de représentation prédéfini des poids est un format signé et asymétrique, et le format de représentation prédéfini des données d'entrée et de sortie de chaque couche est un format signé et asymétrique ou un format asymétrique et non signé si les circuits électroniques dédiés sont configurés pour supporter une arithmétique non signée.

**Patentansprüche**

1. Verfahren zur Implementierung eines künstlichen Neuronennetzwerks in eine Ausführungshardware, das Verfahren umfassend:

   - eine Erlangung (10) durch eine Integrationssoftware einer ursprünglichen digitalen Datei, die ein trainiertes Neuronennetzwerk repräsentiert, das gemäß mindestens einem signierten oder unsignierten, und symmetrischen oder asymmetrischen, Gewichtsdarstellungsformat und mindestens einem Datendarstellungsformat am Ein- und Ausgang der signierten oder unsignierten Schicht des Neuronennetzwerks, und symmetrisch oder asymmetrisch, eingerichtet ist, anschließend
   - a) eine Erkennung der Darstellungsformate des Neuronennetzwerks durch die Integrationssoftware, anschließend - b) eine Umwandlung (C1, C2, C3, C4) von mindestens einem erkannten Darstellungsformat in ein vordefiniertes Darstellungsformat durch die Integrationssoftware, um eine modifizierte digitale Datei zu erlangen, die repräsentativ für das Neuronennetzwerk ist, anschließend
   - c) eine Optimierung durch die Integrationssoftware der modifizierten digitalen Datei, die repräsentativ für das Neuronennetzwerk ist, für die Ausführung des Neuronennetzwerks durch die Ausführungshardware, anschließend
   - d) eine Integration (21) der optimierten digitalen Datei in einen Speicher der Ausführungshardware, und wobei das mindestens eine umgewandelte erkannte Darstellungsformat ein von der Optimierung der Integrationssoftware nicht unterstütztes Darstellungsformat ist und das vordefinierte Darstellungsformat ein von der Optimierung der Integrationssoftware unterstütztes Format ist,
   wobei, wenn das Neuronennetzwerk von einem Prozessor ausgeführt wird und wenn die Gewichte des Neuronennetzwerks in einem asymmetrischen Darstellungsformat dargestellt werden, das vordefinierte Gewichtsdarstellungsformat ein unsigniertes und asymmetrisches Format ist und das vordefinierte Darstellungsformat der Eingangs- und Ausgangsdaten jeder Schicht ein unsigniertes und asymmetrisches Format ist,
   und wobei, wenn das Neuronennetzwerk von einem Prozessor ausgeführt wird und wenn die Gewichte des Neuronennetzwerks in einem symmetrischen Darstellungsformat dargestellt werden, das vordefinierte Gewichtsdarstellungsformat ein signiertes und symmetrisches Format ist und das vordefinierte Darstellungsformat der Eingangs- und Ausgangsdaten jeder Schicht ein unsigniertes und asymmetrisches Format ist, und wobei, wenn man sich dafür entscheidet, das Neuronennetzwerk mithilfe dedizierter elektronischer Schaltungen auszuführen und wenn die Gewichte des Neuronennetzwerks in einem symmetrischen Darstellungsformat dargestellt werden, das vordefinierte Darstellungsformat der Gewichte ein signiertes und symmetrisches Format ist, und das vordefinierte Darstellungsformat der Eingangs- und Ausgangsdaten jeder Schicht ein signiertes und asymmetrisches Format oder ein asymmetrisches und unsigniertes Format ist, wenn die dedizierten elektronischen Schaltungen so eingerichtet sind, dass sie eine unsignierte Arithmetik unterstützen, und wobei, wenn beschlossen wird, das Neuronennetzwerk mindestens teilweise mithilfe von dedizierten elektronischen Schaltungen auszuführen, und wenn die Gewichte des Neuronennetzwerks in einem asymmetrischen Darstellungsformat dargestellt werden, das vordefinierte Gewichtsdarstellungsformat ein signiertes und asymmetrisches Format ist, und das vordefinierte Darstellungsformat der Ein- und Ausgangsdaten jeder Schicht ein signiertes und asymmetrisches Format oder ein asymmetrisches und unsigniertes Format ist, wenn die dedizierten elektronischen Schaltkreise so eingerichtet sind, dass sie eine nicht signierte Arithmetik unterstützen.

2. Verfahren nach Anspruch 1, wobei die Umwandlung des Darstellungsformats von mindestens einem Teil der Daten für mindestens eine Schicht des Neuronennetzwerks erfolgt.

3. Verfahren nach einem der Ansprüche 1 oder 2, wobei die Umwandlung des Darstellungsformats von mindestens einem Teil der Daten für jede Schicht des Neuronennetzwerks erfolgt.

4. Verfahren nach einem der Ansprüche 1 bis 3, wobei die Umwandlung das Hinzufügen einer ersten Umwandlungsschicht am Eingang des Neuronennetzwerks umfasst, die so eingerichtet ist, dass sie den Wert der Daten ändert, die am Eingang des Neuronennetzwerks gemäß dem vordefinierten Darstellungsformat bereitgestellt werden können, und Hinzufügen einer zweiten Umwandlungsschicht am Ausgang des Neuronennetzwerks, die so eingerichtet ist, dass sie den Wert der Ausgangsdaten einer letzten Schicht des Neuronennetzwerks gemäß einem Format für die Darstellung der Ausgangsdaten der ursprünglichen digitalen Datei ändert.

5. Computerprogrammprodukt mit Anweisungen, die, wenn das Programm von einem Computer ausgeführt wird, diesen dazu veranlassen, die Schritte a), b), c) und d) des Verfahrens nach einem der Ansprüche 1 bis 4 auszuführen.

**6.** Computerlesbarer Datenträger, auf dem ein Computerprogrammprodukt nach Anspruch 5 gespeichert ist.

**7.** Computer, umfassend:

- einen Eingang zum Empfangen einer ursprünglichen digitalen Datei, die ein trainiertes Neuronennetzwerk repräsentiert, das gemäß mindestens einem signierten oder unsignierten, und symmetrischen oder asymmetrischen Gewichtsdarstellungsformat, und mindestens einem Datendarstellungsformat am Schichteingang und -ausgang des signierten oder unsignierten Neuronennetzwerks, und symmetrisch oder asymmetrisch eingerichtet ist, und
- eine Verarbeitungseinheit (UT), die für Folgendes eingerichtet ist:

○ eine Erkennung der Darstellungsformate des Neuronennetzwerks, anschließend
○ eine Umwandlung (C1, C2, C3, C4) mindestens eines erkannten Darstellungsformats in ein vordefiniertes Darstellungsformat, um eine modifizierte digitale Datei zu erlangen, die repräsentativ für das Neuronennetzwerk ist,
○ eine Optimierung der modifizierten digitalen Datei, die das Neuronennetzwerk repräsentiert, für die Ausführung des Neuronennetzwerks, eine Ausführungshardware,
○ eine Integration (21) der optimierten digitalen Datei in einen Speicher der Ausführungshardware, wobei die Erkennung, Umwandlung und Optimierung durch eine von der Verarbeitungseinheit ausgeführte Integrationssoftware erfolgt, wobei das mindestens umgewandelte erkannte Darstellungsformat ein Darstellungsformat ist, das von der Optimierung der Integrationssoftware nicht unterstützt wird, und das vordefinierte Darstellungsformat ein Format ist, das von der Optimierung der Integrationssoftware unterstützt wird, wobei, wenn man sich dafür entscheidet, das Neuronennetzwerk durch einen Prozessor auszuführen, und wenn die Gewichte des Neuronennetzwerks nach einem asymmetrischen Darstellungsformat dargestellt werden, das vordefinierte Darstellungsformat der Gewichte ein unsigniertes und asymmetrisches Format ist, und das vordefinierte Darstellungsformat der Eingangs- und Ausgangsdaten jeder Schicht ein unsigniertes und asymmetrisches Format ist,

und wobei, wenn das Neuronennetzwerk von einem Prozessor ausgeführt wird und wenn die Gewichte des Neuronennetzwerks in einem symmetrischen Darstellungsformat dargestellt werden, das vordefinierte Gewichtsdarstellungsformat ein signiertes und symmetrisches Format ist und das vordefinierte Darstellungsformat der Eingangs- und Ausgangsdaten jeder Schicht ein unsigniertes und asymmetrisches Format ist, und wobei, wenn man sich dafür entscheidet, das Neuronennetzwerk mithilfe dedizierter elektronischer Schaltungen auszuführen und wenn die Gewichte des Neuronennetzwerks in einem symmetrischen Darstellungsformat dargestellt werden, das vordefinierte Darstellungsformat der Gewichte ein signiertes und symmetrisches Format ist, und das vordefinierte Darstellungsformat der Eingangs- und Ausgangsdaten jeder Schicht ein signiertes und asymmetrisches Format oder ein asymmetrisches und unsigniertes Format ist, wenn die dedizierten elektronischen Schaltungen so eingerichtet sind, dass sie eine unsignierte Arithmetik unterstützen, und wobei, wenn beschlossen wird, das Neuronennetzwerk mindestens teilweise mithilfe von dedizierten elektronischen Schaltungen auszuführen, und wenn die Gewichte des Neuronennetzwerks in einem asymmetrischen Darstellungsformat dargestellt werden, das vordefinierte Gewichtsdarstellungsformat ein signiertes und asymmetrisches Format ist, und das vordefinierte Darstellungsformat der Ein- und Ausgangsdaten jeder Schicht ein signiertes und asymmetrisches Format oder ein asymmetrisches und unsigniertes Format ist, wenn die dedizierten elektronischen Schaltkreise so eingerichtet sind, dass sie eine nicht signierte Arithmetik unterstützen.

**Claims**

**1.** Method for implementing an artificial neural network in execution hardware, the method comprising:

- obtaining (10), by integration software, an initial digital file representing a trained neural network configured according to at least one signed or unsigned, and symmetrical or asymmetrical, weight representation format, and at least one signed or unsigned, and symmetrical or asymmetrical, format representing input and output data of a layer of the neural network, then
- a) detecting, by the integration software, the formats representing said neural network, then - b) converting (C1, C2, C3, C4), by the integration software, at least one detected representation format to a predefined representation format, so as to obtain a modified digital file representing the neural network, then
- c) optimising, by the integration software, the modified digital file representing the neural network for the execution of the neural network by said execution hardware, then

- d) integrating (21) said optimised digital file into a memory of the execution hardware, and wherein said at least one converted detected representation format is a representation format not supported by said integration-software optimisation and said predefined representation format is a format supported by said integration-software optimisation,

wherein, when choosing to execute the neural network by a processor and when the weights of the neural network are represented in an asymmetrical representation format, the predefined weight representation format is an unsigned and asymmetrical format, and the predefined representation format of the input and output data of each layer is an unsigned and asymmetrical format,

and wherein, when choosing to execute the neural network by a processor and when the weights of the neural network are represented according to a symmetrical representation format, the predefined weight representation format is a signed and symmetrical format, and the predefined representation format of the input and output data of each layer is an unsigned and asymmetrical format, and wherein, when choosing to execute the neural network using dedicated electronic circuits and when the weights of the neural network are represented according to a symmetrical representation format, the predefined weight representation format is a signed and symmetrical format, and the predefined representation format of the input and output data of each layer is a signed and asymmetric format or an asymmetric and unsigned format if the dedicated electronic circuits are configured to support unsigned arithmetic, and wherein, when choosing to execute the neural network at least in part using dedicated electronic circuits and when the weights of the neural network are represented according to an asymmetric representation format, the predefined weight representation format is a signed and asymmetric format, and the predefined representation format of the input and output data of each layer is a signed and asymmetric format or an asymmetric and unsigned format if the dedicated electronic circuits are configured to support unsigned arithmetic.

2. Method according to claim 1, wherein the conversion of the format representing at least a portion of the data is performed for at least one layer of the neural network.

3. Method according to one of claims 1 or 2, wherein the conversion of the format representing at least a portion of the data is performed for each layer of the neural network.

4. Method according to one of claims 1 to 3, wherein the conversion comprises adding a first conversion layer at the input of the neural network configured to modify the value of the data that can be provided at the input of the neural network according to the predefined representation format, and adding a second conversion layer at the output of the neural network configured to modify the value of the output data of a last layer of the neural network according to a format for representing the output data of the initial digital file.

5. Computer programme product comprising instructions which, when the programme is executed by a computer, result in the latter implementing steps a), b), c) and d) of the method according to one of claims 1 to 4.

6. Computer-readable data support, on which the computer program product according to claim 5 is recorded.

7. Computer comprising:

- an input for receiving an initial digital file representing a trained neural network configured according to at least one signed or unsigned, and symmetrical or asymmetrical, weight representation format, and at least one signed or unsigned, and symmetrical or asymmetrical, format representing input and output data of a layer of the neural network, and
- a processing unit (UT) configured to perform:

o a detection of the formats representing said neural network, then
o a conversion (C1, C2, C3, C4) of at least one detected representation format to a predefined representation format so as to obtain a modified digital file representing the neural network,
o an optimisation of the modified digital file representing the neural network for the execution of the neural network an execution hardware,
o an integration (21) of said optimised digital file into a memory of the execution hardware, wherein said detection, conversion, and optimisation are performed by integration software executed by the processing unit, said at least one converted detected representation format being a representation format not supported by said integration-software optimisation and said predefined representation format being a format supported by said integration-software optimisation, wherein, when choosing to execute the neural network by a processor and when the weights of the neural network are represented according to an asymmetrical representation format, the predefined weight representation format is an unsigned and asymmetric format, and the predefined representation format of the input and output data of each layer is an unsigned and asymmetric format,

and wherein, when choosing to execute the neural network by a processor and when the weights of the neural network are represented according to a symmetrical representation format, the predefined weight representation format is a signed and symmetrical format, and the predefined representation format of the input and output data of each layer is an unsigned and asymmetrical format, and wherein, when choosing to execute the neural network using dedicated electronic circuits and when the weights of the neural network are represented according to a symmetrical representation format, the predefined weight representation format is a signed and symmetrical format, and the predefined representation format of the input and output data of each layer is a signed and asymmetric format or an asymmetric and unsigned format if the dedicated electronic circuits are configured to support unsigned arithmetic, and wherein, when choosing to execute the neural network at least in part using dedicated electronic circuits and when the weights of the neural network are represented according to an asymmetric representation format, the predefined weight representation format is a signed and asymmetric format, and the predefined representation format of the input and output data of each layer is a signed and asymmetric format or an asymmetric and unsigned format if the dedicated electronic circuits are configured to support unsigned arithmetic.

# FIG.1

# FIG.2